Europäisches Patentamt

European Patent Office

Office européen des brevets

(19)

(11) Veröffentlichungsnummer: **0 231 804**
**A2**

## EUROPÄISCHE PATENTANMELDUNG

(12)

(21) Anmeldenummer: 87100693.8

(22) Anmeldetag: 20.01.87

(51) int. Cl.4: **B62D 5/08**

(30) Priorität: 04.02.86 US 825848

(43) Veröffentlichungstag der Anmeldung:
12.08.87 Patentblatt 87/33

(84) Benannte Vertragsstaaten:
**DE ES FR GB IT SE**

(71) Anmelder: **DEERE & COMPANY**
**1 John Deere Road**
**Moline Illinois 61265(US)**

(72) Erfinder: **Wittren, Richard Arthur**
**608 Baker Drive**
**Cedar Falls Iowa 50613(US)**

(74) Vertreter: **Feldmann, Bernhard**
**DEERE & COMPANY European Office, Patent**
**Department Steubenstrasse 36-42 Postfach**
**503**
**D-6800 Mannheim 1(DE)**

(54) **Regelventil.**

(57) Bei Hydrauliksystemen, insbesondere bei Lenksystemen, ist es zuweilen wünschenswert, an einer Verstelleinrichtung (12), etwa an einer Lenkpumpe, einen Widerstand aufzubauen, der einer Bedienungsperson ein Gefühl dafür gibt, welcher Kraftaufwand zum Verstellen eines Motors (14), z. B. eines Lenkzylinders, erforderlich ist. Hierzu wie auch zur geregelten Zuführung von Druckflüssigkeit zu dem Motor (14) ist ein Regelventil (13) vorgesehen, das derart ausgebildet ist, daß ein Regelkreis zur Verstellung eines in ihm gleitenden Schiebers (44) unabhängig ist von einem Speisekreis des Motors (14), wobei jedoch zur vollen Ausnutzung der geförderten Druckflüssigkeitsmenge der Regelkreis und der Speisekreis stromabwärts des Schiebers (44) wieder miteinander verbunden werden.

Fig. I

## Regelventil

Die Erfindung betrifft ein Regelventil, insbesondere für Lenksysteme, mit einem Gehäuse und einem Schieber, wobei das Gehäuse Ein-und Ausgänge zur Verbindung mit einer Verstelleinrichtung für den Schieber, einer Pumpe und einem Motor aufweist und wobei der Schieber mittels der Verstelleinrichtung über einen Regelkreis stirnseitig druckbeaufschlagbar und verschiebbar ist, um die Pumpe über einen Speisekreis mit dem Motor zu verbinden.

Bei dem bekannten Regelventil (US-A-4 463 819) ist in einem Gehäuse eine Bohrung vorgesehen, die in sich gleitend einen Schieber aufnimmt und mit einer als Lenkpumpe ausgebildeten Verstelleinrichtung, mit einem Sammelbehälter, mit einer Pumpe und mit einem Lenkzylinder verbunden ist. Zwischen den Stirnseiten des Schiebers und den diesen zugelegenen Enden der Bohrung sind Kammern gebildet, in die Federn eingesetzt sind, um den Schieber in einer Neutralstellung zu zentrieren, in der keine Verbindung zwischen dem Lenkzylinder und der Pumpe oder der Lenkpumpe besteht. Den Kammern kann von der Lenkpumpe unter Druck gesetztes Hydrauliköl zugeführt werden, so daß der Schieber bei einem Druckungleichgewicht an seinen beiden Stirnseiten in die eine oder die andere Richtung verschoben wird, um Druckflüssigkeit von der Lenkpumpe der einen oder der anderen Seite des Lenkzylinders zuzuführen. Je nach Stellung des Schiebers wird dann der Querschnitt des Durchlasses zwischen einem Eingang der Lenkpumpe und einem Ausgang zu dem Lenkzylinder vergrößert, so daß dem Lenkzylinder mehr oder weniger Druckflüssigkeit zugeführt wird.

Die der Erfindung zugrunde liegende Aufgabe wird darin gesehen, ein Regelventil zu schaffen, das es erlaubt, die zum Verstellen des Motors erforderliche Kraft an der Verstelleinrichtung, also insbesondere an der Lenkpumpe, noch genauer zu fühlen.

Diese Aufgabe ist erfindungsgemäß durch Patentanspruch 1 gelöst worden.

Auf diese Weise wird das Empfinden über die Größe der erforderlichen Kraft, das allein abhängig ist von dem an dem Schieber aufzubauenden und aufrecht zu erhaltenden Druck, nicht durch die in dem Speisekreis zwischen der Pumpe und dem Motor fließende Druckflüssigkeit beeinflußt.

Die für die Verstellung des Schiebers erforderliche Kraft wird durch die in Patentanspruch 2 genannten Merkmale hervorragend geregelt, im Gegensatz zu dem bekannten Regelventil, bei dem der an der Stirnseite des Schiebers anstehende Druck dem am Motor anstehenden Druck entspricht.

Die Menge der dem Motor zugeführten Druckflüssigkeit wird durch die Verwirklichung der Merkmale des Patentanspruches 3 optimal bestimmt, und zwar ausschließlich in Abhängigkeit von dem mittels der Verstelleinrichtung aufgebauten Druck.

Die Merkmale der weiteren Patentansprüche stellen vorteilhafte Weiterentwicklungen des erfindungsgemäßen Regelventils dar.

In der Zeichnung ist ein nachfolgend näher beschriebenes Ausführungsbeispiel der Erfindung dargestellt. Es zeigt:

Figur 1 einen Schaltplan eines Hydrauliksystems in schematischer Darstellung mit einem erfindungsgemäßen Regelventil im Vertikalschnitt,

Figur 2 einen Vertikalschnitt durch einen in dem Regelventil nach Figur 1 geführten Schieber entlang der Linie 2 -2 und in Blickrichtung der dazugehörigen Pfeile und

Figur 3 einen Teil des Schaltplanes nach Figur 1 in abgeänderter Form.

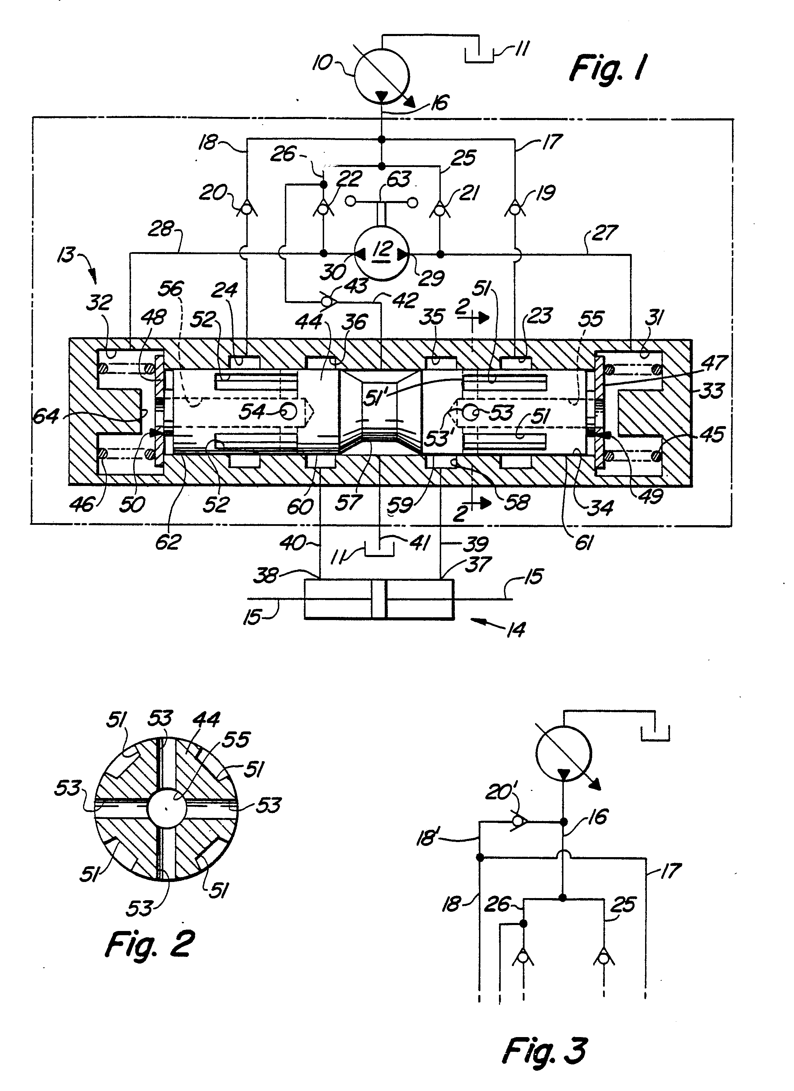

Ein Hydrauliksytem, wie es in Figur 1 dargestellt ist, enthält eine Pumpe 10, die konstant von einer nicht gezeigten Kraftmaschine angetrieben wird und die einem Sammelbehälter 11 Flüssigkeit entnimmt, um sie einem Motor 14 zuzuführen, und zwar abhängig von der Steuerung durch eine Verstelleinrichtung 12 und ein erfindungsgemäßes Regelventil 13. Außer der Pumpe 10 kann jedoch jede andere Druckbesorgungseinrichtung, wie ein Druckspeicher, verwendet werden.

Dieses Hydrauliksystem kann insbesondere bei einem hydrostatischen Lenksystem zur Anwendung kommen, bei dem die Pumpe 10 von einer Haupthydraulikpumpe, die Verstelleinrichtung 12 von einer Lenkpumpe und der Motor 14 von einem Lenkzylinder gebildet werden. In einem derartigen Anwendungsfalle würden die Lenkpumpe und der Lenkzylinder in zwei Richtungen funktionieren. Jedoch kann ein derartiges Hydrauliksystem auch zur Steuerung eines Schwenkarmes einer Hebevorrichtung, zur Steuerung einer Werkzeugmaschine, zur Steuerung einer Schwenkvorrichtung oder dergleichen verwendet werden.

Die Pumpe 10 und die Verstelleinrichtung 12 sind herkömmlicher Bauart, während das Regelventil 13 wie nachstehend ausgeführt aufgebaut ist. Der Motor 14 enthält bei diesem Ausführungsbeispiel einen verschiebbaren Kolben mit zwei seitlich austretenden Kolbenstangen 15, die gegebenenfalls mit nicht gezeigten Lenkarmen oder einem Lenkgestänge verbunden sind. Der Einfachheit wegen werden bei einigen symmetrisch angeordneten Komponenten des Hydrauliksystems zur Beschreibung die Angaben "links" und "rechts" oder dergleichen, die sich nach dem Blick auf die Zeichnung richten, verwendet.

Zunächst wird die Verbindung zwischen der Pumpe 10, der Verstelleinrichtung 12 und dem Regelventil 13 erläutert. Von der Pumpe 10 fließt Druckflüssigkeit in eine Speise leitung 16, die eine Verzweigungsstelle für eine rechte und eine linke Speiseleitung 17 und 18 aufweist. Beide Speiseleitungen 17, 18 sind entsprechend mit einem linken und einem rechten Eingang 23 und 24 in dem Regelventil 13 verbunden, die beide die Form einer in die Wandung einer Bohrung 34 eingedrehten Ringnut haben. In die Speiseleitungen 17, 18 sind Rückschlagventile 19 bzw. 20 eingesetzt, die einen Flüssigkeitsfluß ausschließlich in Richtung von der Pumpe 10 zu den vorgenannten Eingängen 23, 24 zulassen. Die Speiseleitung 16 endet an einem Abzweig für eine rechte und eine linke Leitung 25 und 26, die über jeweils ein Rückschlagventil 21 und 22 mit einer rechten und einer linken Leitung 27 und 28 und mit der Verstelleinrichtung 12 verbunden sind. Die Rückschlagventile 21 und 22 verhindern einen Umlauf der Flüssigkeit um die Verstelleinrichtung 12 und von einer der Leitungen 25, 26 zu der Pumpe 10.

Die Verstelleinrichtung 12 hat einen links-und einen rechtsseitigen Arbeitsanschluß 29 und 30, die an die Leitungen 27, 28 angeschlossen sind und die dazu dienen, an der Verstelleinrichtung 12 Druckflüssigkeit der einen Leitung 27, 28 zuzuführen und sie gleichzeitig der anderen Leitung 28, 27 zu entnehmen. So wird beispielsweise über die rechte Leitung 27 Druckflüssigkeit dem Regelventil 13 zugeführt, während über die linke Leitung 28 entweder dem Regelventil 13 oder der Leitung 26 welche entnommen wird, wenn von der linken zu der rechten Seite der Verstelleinrichtung 12 gefördert werden soll. Die linken und rechten Leitungen 27, 28 sind jeweils an eine rechte und eine linke Kammer 31 und 32 der Bohrung 34 in dem Regelventil 13 angeschlossen.

Die Eingänge 23 und 24 und die Kammern 31 und 32 sind in einem Gehäuse 33 in dem Regelventil 13 enthalten und öffnen sich zu der in dem Gehäuse 33 vorgesehenen Bohrung 34, in der ein Schieber 44 gleitend beweglich ist und eine in Figur 1 gezeigte Neutralstellung einnehmen kann. Die Kammer 32 ist in dem linken und die Kammer 31 in dem rechten Endbereich der Bohrung 34 gelegen. In Richtung auf die Mitte der Bohrung 34 zu folgen auf die Kammern 31, 32 die Eingänge 23, 24 in symmetrischer Anordnung auf der linken bzw. rechten Seite der Bohrung 34. Noch weiter nach innen fortschreitend folgt ein Paar von Ausgängen 35, 36 für einen Verbraucher, nämlich den Motor 14, die aus symmetrisch angeordneten Ringnuten bestehen und an rechte und linke Lasteingänge 37, 38 des Motors 14 über eine rechte bzw. linke Leitung 39 bzw. 40 angeschlossen sind. In ihrem Mittenbereich ist die Bohrung 34 mit einem Auslaß für eine zu dem Sammelbehälter 11 führende Leitung 41 und einem Auslaß für eine Rückführleitung 42 für Flüssigkeit, die unter einem hohen Druck steht, versehen, wobei die Rückführleitung 42 stromaufwärts des Rückschlagventils 22 in die Leitung 26 mündet. Auch in der Rückführleitung 42 ist ein Rückschlagventil 43 vorgesehen, um einen Fluß von Druckflüssigkeit von der Pumpe 10 zu der Bohrung 34 zu unterbinden. Der Schieber 44 wird an seiner rechten und linken Stirnseite 49 und 50 von Kraftspeichern 45 bzw. 46 beaufschlagt, die als Schraubendruckfedern ausgebildet und in den Kammern 31 bzw. 32 angeordnet sind, wobei sich jeder Kraftspeicher 45, 46 zwischen einer Scheibe 47 bzw. 48 und einer Endwand der Kammern 31, 32 erstreckt. Die rechten und linken Stirnseiten 49 bzw. 50 des Schiebers 44 liegen an der ihnen zugelegenen Scheibe 47 bzw. 48 an, die zusammen mit den Kraftspeichern 45, 46 den Schieber 44 in seiner Neutralstellung axial innerhalb der Bohrung 34 zentrieren. Die Mantelfläche des Schiebers 44 ist auf beiden Seiten mit sich diametral gegenüberliegenden Längsnuten 51 und 52 versehen, die axial mit dem Schieber 44 verlaufen. Ein Flüssigkeitsfluß von der rechten bzw. linken Kammer 31 bzw. 32 zu den Längsnuten 51 bzw. 52 wird durch Stege 61 bzw. 62 verhindert, wobei die Längsnuten 51 und 52 so angeordnet sind, daß sie ständig mit den Eingängen 23 und 24 in axialer Richtung überlappen. Zudem überlappen die Längsnuten 51 die Ringnut für den Ausgang 35 zu dem Motor 14, wenn der Schieber 44 nach links bewegt wird, und die Längsnuten 52 überlappen die Ringnut des Ausgangs 36, wenn der Schieber 44 nach rechts geschoben wird. In der Mitte des Schiebers 44 befindet sich eine Sammelbehälternut 57, die von den Längsnuten 51 bzw. 52 durch Stege 59 und 60 getrennt ist. Diese Sammelbehälternut 57 steht ständig in Verbindung mit der zu dem Sammelbehälter 11 führenden Leitung 41 und der Rückführleitung 42 und stellt eine Verbindung der Leitung 41 und der Rückführleitung 42 mit dem Ausgang 35 oder 36 her, wenn der Schieber 44 nach links oder nach rechts bewegt wird. Auf der rechten wie auf der linken Seite des Schiebers 44 sind Dosieröffnungen 53 und 54 vorgesehen, wobei der rechten Dosieröffnung 53 Druckflüssigkeit über einen als Blindbohrung ausgebildeten Kanal 55 in dem Schieber 44 zugeführt wird. Das rechts gelegene und offene Ende des Kanals 55 steht in Verbindung mit der Kammer 31, und sein geschlossenes Ende schließt an einen radial verlaufenden Durchgang an, der die Dosieröffnung 53 bildet. Auf der gegenüberliegenden Seite des Schiebers 44 sind die Dosieröffnungen 54 über einen Kanal 56 mit der Kammer 32 verbunden, wobei der Kanal 56 gleich ist zu dem Kanal 55.

Figur 2 zeigt einen Querschnitt durch den Schieber 44 in der Höhe der Dosieröffnungen 53 und der Längsnuten 51, von denen insgesamt vier vorgesehen und mit gleichen Abständen auf der Mantelfläche des Schiebers 44 angeordnet sind. In Winkelbereichen zwischen den Längsnuten 51 münden in die Mantelfläche des Schiebers 44 zudem die vier Dosieröffnungen 53. Diese Anordnung ist erforderlich, um einen Fluß von Flüssigkeit durch die Dosieröffnungen 53 getrennt zu halten von einem Flüssigkeitsfluß durch die Längsnuten 51, was wiederum erforderlich ist, um die Verstärkung durch das Regelventil 13 zu ändern, wie dies später noch erklärt wird. Es ist somit klar, daß der Regelkreis, der sich aus der Verstelleinrichtung 12, den Leitungen 27, 28, den Kammern 31, 32, den Kanälen 55, 56 und den Dosieröffnungen 53, 54 zusammensetzt, unabhängig ist von dem Speisekreis für den Motor 14, der von der Pumpe 10 aus über die Speiseleitungen 17, 18, die Eingänge 23, 24, die Längsnuten 51, 52 und die Ausgänge 35, 36 verläuft. Die Trennung des Speisekreises von dem Regelkreis besteht, bis der Schieber 44 so weit verschoben worden ist, daß die Dosieröffnungen 53, 54 und die Längsnuten 51, 52 nicht mehr von der Wandung der Bohrung 34 abgeschlossen werden, d. h. stromaufwärts des Schiebers 44.

Wie jeder Fachmann erkennt, ist das vorbeschriebene Regelventil 13 zur Anwendung in einem geschlossenen Hydrauliksystem bestimmt; eine Anwendung in einem offenen Hydrauliksystem wäre bei einer entsprechenden Leitungsführung jedoch genausogut möglich. Wenn das geschlossene Hydrauliksystem, wie es zuvor beschrieben worden ist, angewendet wird, kann die Leitungsführung auch gemäß Figur 3 geändert werden, um ein Rückschlagventil einzusparen. Man erkennt in Figur 3, daß eine Speiseleitung 18' einenends von der Speiseleitung 16 abzweigt und anderenends zu der rechten und linken Speiseleitung 17 und 18 führt. In diesem Falle werden die beiden einzelnen Rückschlagventile 19 und 20 durch ein einziges Rückschlagventil 20' ersetzt, das ein Zurückströmen von Flüssigkeit aus einem der Eingänge 23, 24 durch die Speiseleitungen 17 oder 18 zu der Pumpe 10 verhindert.

Ausgehend von dem Vorbeschriebenen wird nachfolgend die Funktion des Hydrauliksystems und insbesondere des Regelventils 13 erläutert.

Die Verstelleinrichtung 12 kann derart betätigt werden, daß sie den Schieber 44 nach links oder nach rechts verschiebt. Bezogen auf die Anwendung in einem Lenksystem könnte also die Lenkpumpe derart betätigt werden, daß sie eine Links- oder eine Rechtslenkung hervorruft. Während einer Rechtslenkung würde dann das Regelventil 13 dem einen Ende des Motors 14 und während einer Linkslenkung würde das Regelventil 13 dem anderen Ende des Motors 14 Druckflüssigkeit zuführen.

Solange über die Verstelleinrichtung 12 kein Flüssigkeitsstrom verläuft, halten die Kraftspeicher 45, 46 den Schieber 44 zentriert in seiner Neutralstellung, in der jeglicher Flüssigkeitsfluß über das Regelventil 13 unterbunden wird. Dabei wird eine Flüssigkeitsverbindung zu oder von den Ringnuten der Eingänge 23, 24 durch die Stege 61 und 59 auf beiden Seiten der rechten Längsnuten 51 und durch Stege 60 und 62 auf beiden Seiten der linken Längsnuten 52 unterbunden. Die Druckflüssigkeit wird in den Kammern 31, 32 dadurch gehalten, daß die Dosieröffnungen 53, 54 von der Wandung der Bohrung 34 verschlossen werden. Schließlich befinden sich die Stege 59, 60 in Deckung mit den zu dem Motor 14 führenden Ausgängen 35, 36, um eine Strömung von Flüssigkeit in die oder aus den Lasteingängen 37 bzw. 38 zu verhindern.

Um bei der Anwendung in einem Lenksystem ein Fahrzeug zu lenken, wird ein Rad 63, also ein Lenkrad, der Verstelleinrichtung 12 gedreht, um einen Flüssigkeitsdruck, und zwar in diesem Fall durch Zufluß von Flüssigkeit zu dem Arbeitsanschluß 30 bei gleichzeitigem Abfluß aus dem Arbeitsanschluß 29, aufzubauen. Solange die Drehung des Rades 63 erfolgt, wird in der Kammer 31 der Flüssigkeitsdruck erhöht werden. Diese Druckerhöhung wirkt auf die rechte Stirnseite 49 des Schiebers 44 und bewegt diesen nach links, so daß der linke Kraftspeicher 46 gespannt und Flüssigkeit aus der Kammer 32 gedrängt wird, die über die linke Leitung 28 dem linken nun als Einlaß dienenden Arbeitsanschluß 30 zufließt. Jegliche überdies an der Verstelleinrichtung 12 erforderliche Flüssigkeit wird ihr von der Pumpe 10 über die Leitung 26 zugeführt.

Der andauernde Zustrom von unter Druck stehender Flüssigkeit wird normalerweise die voreilende Kante 53' der Dosieröffnung 53 an einer benachbarten Kante 58 der Ringnut des Ausganges 35 vorbeibewegen und somit die Sammelbehälternut 57 in Deckung mit der Ringnut des Ausganges 36 bringen. Daher fließt unter Druck stehende Flüssigkeit von den Dosieröffnungen 53 durch den Ausgang 35, die Leitung 39 und den Lasteingang 37 in den Motor 14 und durch den Lasteingang 38, durch die Leitung 40, durch den Ausgang 36 in den Sammelbehälter 11. Die nach links gerichtete Bewegung des Schiebers 44 hält an, bis die Dosieröffnungen 53 so weit an der Kante 58 vorbeibewegt worden sind, daß ein stabiler statischer Druckabfall entwickelt wird, der so geschaffen ist, daß die Druckkraft, die von der Verstelleinrichtung 12 in der Kammer 31 aufgebaut wird, durch die Kraft des Kraftspeichers 46 ausgeglichen wird oder die Scheibe 49 einen Anschlag 64 am linken Ende der Bohrung 34 berührt. Die veränderliche Querschnittsfläche bzw. die Drosselung, die durch das Zusammenwirken der Dosieröffnungen 53 und der Kante 58 hervorgerufen wird, ermöglicht daher eine Veränderung in der Verstellung des Schiebers 44 bzw. des Regelventils 13, die der von der Verstelleinrichtung 12 erzeugten Durchflußmenge proportional ist. Außerdem werden zur gleichen Zeit, zu der sich der Schieber 44 nach links bewegt, die Längsnuten 51 die Ringnut des Ausgangs 35 überlappen, so daß unter Druck stehende Flüssigkeit von der Pumpe 10 dem linken Lasteingang 37 des Motors 14 zugeführt werden kann. Die Größe des Volumenstromes von den Längsnuten 51 in den Ausgang 35 ist dabei proportional zu dem Maß der Überlappung. Die Dosieröffnungen 53 steuern daher sowohl das Maß der nach links gerichteten Bewegung des Schiebers 44 wie auch das Maß der Überlappung, so daß darüber der Volumenstrom, der dem Motor 14 von der Pumpe 10 aus zugeführt wird, reguliert werden kann. In diesem Ausführungsbeispiel ist die voreilende Kante 53' der Dosieröffnungen 53 derart zu der voreilenden oder inneren Kante 51' jeder Längsnut 51 ausgerichtet, daß beide gleichzeitig mit der Kante 58 der Ringnut 35 in Berührung bzw. in Deckung geraten. Jedoch kann diese Ausrichtung auch geändert werden, und zwar derart, daß das Zuführen von Flüssigkeit aus der Pumpe 10 zu dem Motor 14 der Einspeisung von Flüssigkeit aus der Verstelleinrichtung 12 vor-oder nacheilt. Es ist zudem möglich, die Form oder die axiale Weite der Dosieröffnungen 53 zu ändern, um das Maß der von der Pumpe 10 eingespeisten Flüssigkeitsmenge bzw. deren Anteil zu verändern bzw. zu vergrößern. Der Schieber 44 verbleibt in seiner linken Stellung so lange, wie ein fortdauernder Flüssigkeitsstrom über die Verstelleinrichtung 12 in den Arbeitsanschluß 30 hinein und aus dem Arbeitsanschluß 29 heraus stattfindet. Sobald sich dieser Flüssigkeitsstrom verringert, reduziert sich auch der Druckabfall über die Dosieröffnungen 53, so daß schließlich auch der Druck in der Kammer 31 abfällt. Kurzzeitig, nachdem der Flüssigkeitsstrom über die Verstelleinrichtung 12 abgebrochen wird, gleichen sich die Drücke in den Kammern 31 und 32 aus, so daß der Schieber 44 zurück in seine zentrierte Neutralstellung gebracht wird.

Ein Lenkvorgang in der anderen Richtung wird durch eine derartige Drehung des Rades 63 bewirkt, daß eine Flüssigkeitsströmung in den Arbeitsanschluß 29 hinein und aus dem Arbeitsanschluß 30 heraus über die Verstelleinrichtung 12 erfolgt. Die somit über die Verstelleinrichtung 12 aufgebaute Druckdifferenz bewirkt in analoger Weise eine Bewegung des Schiebers 44 nach rechts, so daß der Motor 14 eine Bewegung in der entgegengesetzten Richtung durchführt.

Alle Ringnuten, Ausgänge, Eingänge und Kammern, die zum Zuführen von Flüssigkeit zu dem Motor 14 in einer Richtung benötigt werden, können als einander zugeordnet betrachtet werden. In diesem Sinne sind die Ringnut des Ausgangs 35, die Längsnuten 51, die Dosieröffnungen 53, die Ringnut des Einganges 23 und die Kammer 31 einander zugeordnet, und sie arbeiten zusammen, um Flüssigkeit dem rechten Lasteingang 37 zuzuführen. Der gleiche Zusammenhang besteht für Elemente, die auf der linken Seite des Regelventils 13 vor gesehen sind und eine Bewegung des Motors 14 in der anderen Richtung bewirken.

Die Verstelleinrichtung 12 kann zudem im Falle eines Schadens an der Pumpe 10 an dem Motor 14 einen Notdruck aufbauen, so daß eine Bedienungsperson ein Fahrzeug noch lenken kann, indem sie lediglich das Rad 63 der Verstelleinrichtung 12 dreht. Wird beispielsweise die Verstelleinrichtung 12 derart durch Drehen des Rades 63 betätigt, daß eine Flüssigkeitsströmung in den Arbeitsanschluß 30 hinein und aus dem Arbeitsanschluß 29 heraus stattfindet, dann wird ein Umgehen des Regelventils 13 und des Motors 14 durch die Flüssigkeitsströmung mittels des Rückschlagventils 21 verhindert. Der Flüssigkeitsdruck in der Kammer 31 wird dadurch wieder erhöht, so daß sich der Schieber 44 nach links bewegt und Flüssigkeit durch die Dosieröffnungen 53 zu dem rechten Lasteingang 37 des Motors 14 fließt. Wenn der Schieber 44 einmal nach links bewegt worden ist, wird der Druck der Flüssigkeit auch in der rechten Ringnut des Einganges 23 über die Längsnuten 51 aufgebaut. Jedoch wird ein Ausströmen von Flüssigkeit aus dem Eingang 23 durch die rechte Speiseleitung 17 mittels des Rückschlagventils 19 verhindert. In einer derartigen Notfallsituation hat die Leitungsführung gemäß Figur 1 einen Vorteil gegenüber der Leitungsführung nach Figur 3, da das zusätzliche Rückschlagventil einen Rückfluß der Flüssigkeit in den Eingang 24 verhindert, was im Falle der Leitungsführung gemäß Figur 3 möglich wäre. Die Verhinderung des Rückflusses von Flüssigkeit zum Eingang 24 reduziert jedoch die Leckölmenge des Hydrauliksystems und stellt somit mehr Flüssigkeit zur Verfügung, um eine Bewegung des Motors 14 zu erreichen.

**Ansprüche**

1. Regelventil, insbesondere für Lenksysteme, mit einem Gehäuse (33) und einem Schieber (44), wobei das Gehäuse (33) Ein-und Ausgänge (23, 24, 35, 36) zur Verbindung mit einer Verstelleinrichtung (12) für den Schieber (44), einer Pumpe (10) und einem Motor (14) aufweist und wobei der Schieber (44) mittels der Verstelleinrichtung (12) über einen Regelkreis stirnseitig druckbeaufschlagbar und verschiebbar ist, um die Pumpe (10) über einen Speisekreis mit dem Motor (14) zu verbinden, dadurch gekennzeichnet, daß stromaufwärts des Schiebers (44) der Regel-und der Speisekreis voneinander unabhängig und stromabwärts des Schiebers (44) miteinander verbunden sind.

2. Regelventil nach Anspruch 1, dadurch gekennzeichnet, daß in dem Regelkreis der Schieber (44) Kanäle (55, 56) und mit diesen verbundene Dosieröffnungen (53, 54) enthält, die an Stirnseiten (49, 50) des Schiebers (44) mit der Verstelleinrichtung (12) verbunden und abhängig von der Verschiebung des Schiebers (44) mit den zu dem Motor (14) führenden Ausgängen (35, 36) in Deckung bringbar sind.

3. Regelventil nach Anspruch 1, dadurch gekennzeichnet, daß in dem Speisekreis der Schieber (44) auf seiner Mantelfläche Längsnuten (51, 52) aufweist, über die die Eingänge (23, 24) der Pumpe (10) mit den Ausgängen (35, 36) für den Motor (14) verbindbar sind.

4. Regelventil nach Anspruch 3, wobei die Ausgänge (35, 36) zu dem Motor (14) in Ringnuten in der Wandung der Bohrung (34) münden, dadurch gekennzeichnet, daß die Längsnuten (51, 52) und die Dosieröffnungen (53, 54) der Kanäle (55, 56) von den Ausgängen (35, 36) getrennt sind, solange sich der Schieber (44) in seiner Neutralstellung befindet.

5. Regelventil nach Anspruch 4, dadurch gekennzeichnet, daß der Anfang der Dosieröffnungen (53, 54) und der Längsnuten (51, 52) in axialer Richtung die gleiche Entfernung zu den Ausgängen (35, 36) aufweist.

6. Regelventil nach Anspruch 4, dadurch gekennzeichnet, daß der Anfang der Dosieröffnungen (53, 54) und der Längsnuten (51, 52) in axialer Richtung unterschiedliche Entfernungen zu den Ausgängen (35, 36) aufweist.

7. Regelventil nach einem oder mehreren der vorherigen Ansprüche, wobei der Schieber (44) in seiner Neutralstellung mittels Kraftspeichern (45, 46), insbesondere Federn, zentriert wird, die zwischen seinen Stirnseiten (49, 50) und den Enden der Bohrung (34) eingesetzt sind.

8. Regelventil nach einem oder mehreren der vorherigen Ansprüche, wobei der Verstelleinrichtung (12) von der Pumpe (10) Druckmittel zugeführt wird, dadurch gekennzeichnet, daß von einer Speiseleitung (16) zwischen der Pumpe (10) und der Verstelleinrichtung (12) Speiseleitungen (17, 18) zu der Bohrung (34) für den Motor (14) abzweigen und daß Rückschlagventile (21, 22) vorgesehen sind, die eine Strömung von der Verstelleinrichtung (12) in Richtung der Speiseleitungen (17, 18) verhindern.

Fig. 1

Fig. 2

Fig. 3